(19) Europäisches Patentamt
European Patent Office
Office européen des brevets

(11) **EP 1 798 889 B1**

(12) **EUROPEAN PATENT SPECIFICATION**

(45) Date of publication and mention
of the grant of the patent:
**28.05.2008 Bulletin 2008/22**

(51) Int Cl.:
**H04L 9/08** (2006.01)   **H04L 9/30** (2006.01)

(21) Application number: **05112287.7**

(22) Date of filing: **16.12.2005**

(54) **System and method of securely distributing keys for peer-to-peer usage**

System und Verfahren zum sicheren Verteilen von Schlüsseln für eine Peer-to-Peer-Benutzung

Système et procédé pour la distribution sécurisée des clés pour l'utilisation point-à-point

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(43) Date of publication of application:
**20.06.2007 Bulletin 2007/25**

(60) Divisional application:
**08150147.0 / 1 906 585**

(73) Proprietor: **Research In Motion Limited**
**Waterloo, Ontario N2L 3W8 (CA)**

(72) Inventors:
• **Brown, Michael K.**
  **Kitchener,**
  **Ontario N2M 2Z2 (CA)**
• **Brown, Michael S.**
  **Waterloo,**
  **Ontario N2K 4B1 (CA)**
• **MacFarlane, David Victor**
  **Waterloo,**
  **Ontario N2V 2M2 (CA)**

• **Little, Herb**
  **Waterloo,**
  **Ontario N2T 2V8 (CA)**

(74) Representative: **Rickard, David John et al**
  **26 Mallinson Road**
  **London SW11 1BP (GB)**

(56) References cited:
  **EP-A- 1 233 570**

• **BLUNDO C ET AL: "Perfectly-Secure Key Distribution for Dynamic Conferences"[Online] 6 June 1995 (1995-06-06), XP002352273 Retrieved from the Internet: URL:http:// citeseer.ist.psu.edu/cache/pape rs/cs/788/http: zSzzSzwww.unisa.itzSzpapers zSzkds.pdf/ blundo95perfectlysecure.pdf> [retrieved on 2006-05-16]**
• **DONGGANG LIU ET AL: "Establishing Pairwise Keys in Distributed Sensor Networks" ACM TRANSACTIONS ON INFORMATION AND SYSTEM SECURITY, vol. 8, no. 1, February 2005 (2005-02), pages 41-77, XP002381241**

**Description**

Embodiments of the invention relate generally to the processing of messages, such as peer-to-peer messages, and more specifically to a system and method of distributing keys for use in encrypting and decrypting the contents of such messages to be transmitted between mobile devices.

Mobile devices typically provide a number of different modes of communication. For example, a mobile device may be used to send and receive both voice and data communications. More specifically, with regards to data communications, a mobile device may allow different types of messages to be sent and received, including electronic mail messages, text messages, and personal identification number (PIN) messages, for example.

In one example implementation, a PIN is an eight-digit number (e.g. "20021215") that is associated with a specific mobile device. In general, a mobile device is assigned a PIN that uniquely identifies that particular mobile device. A PIN message is a message that may be transmitted from one mobile device to another mobile device, where the PIN of the recipient mobile device is identified by the sender of the message.

A user of a mobile device may compose a PIN message in a manner that is similar to the way that an e-mail message would be composed. A PIN message, however, is typically transmitted between mobile devices in a manner that is different from the manner in which e-mail messages are transmitted between mobile devices. For example, a PIN message may be transmitted from one mobile device to another without being routed through an e-mail message server.

When a PIN message is transmitted from one mobile device to another, the contents of the message may be encrypted as a security measure. A key residing on the sender's mobile device may be used to encrypt PIN messages prior to transmission and decrypt PIN messages received by the mobile device. In one known implementation, each mobile device associated with the same manufacturer is provided with the same key (i.e. a common "PIN-to-PIN key"), to be used for encrypting PIN messages sent to and decrypting PIN messages received by the mobile devices. However, in this known implementation, if one mobile device gets compromised and the common PIN-to-PIN key is discovered, then the PIN-to-PIN key used by all mobile devices of that manufacturer would become known. The article "Perfectly secure key distribution for dynamic conferences" assigned to Blundo et al and published on June 6, 1995, discloses a secure key distribution scheme for dynamic conferences wherein a trusted server distributes individual polynomials to different users in the network.

General

Embodiments of the invention are preferably generally directed to a more secure system and method for generating keys that can be used for encrypting and decrypting PIN messages transmitted between mobile devices, such that if only one mobile device gets compromised and the key used by that mobile device to encrypt and decrypt PIN messages is discovered, the keys used by other mobile devices to encrypt and decrypt PIN messages would not become known.

In one broad aspect of the invention, there is preferably provided a method of securely distributing keys to a plurality of mobile devices, wherein each of the plurality of mobile devices has a PIN associated therewith, the method comprising the steps of: defining a security parameter $d$ associated with the plurality of mobile devices; defining a function $f$ of at most degree $d$ associated with the plurality of mobile devices, the function $f$ comprising a first variable $x$ and a second variable $y$, wherein $f(x,y) = f(y,x)$ over a finite field $F_q$ of order $q$; for a first mobile device of the plurality of mobile devices, evaluating, at the first mobile device, $f$ with one of $x$ and $y$ having the value of the PIN thereof to compute a first device-specific function $f_1$; and for a second mobile device of the plurality of mobile devices, evaluating, at the second mobile device, $f$ with one of $x$ and $y$ having the value of the PIN thereof to compute a second device-specific function $f_2$; wherein, in operation, at least one message is encrypted, using a shared key computed at the first mobile device by evaluating $f_1$ with the other of $x$ and $y$ having the value of the PIN of the second mobile device, and is transmitted from the first mobile device to the second mobile device, the at least one message capable of being decrypted using a shared key computable at the second device by evaluating $f_2$ with the other of $x$ and $y$ having the value of the PIN of the first mobile device.

Brief Description of the Drawings

For a better understanding of the embodiments described herein, and to show more clearly how they may be carried into effect, reference will now be made, by way of example, to the accompanying drawings in which:

FIG. 1 is a block diagram of a mobile device in one example implementation;

FIG. 2 is a block diagram of a communication subsystem component of the mobile device of FIG. 1;

FIG. 3 is a block diagram of a node of a wireless network;

FIG. 4 is a block diagram illustrating components of a host system in one example configuration; and

FIG. 5 is a flowchart illustrating steps in a method of securely distributing keys to a plurality of mobile devices in at least one embodiment.

Description of Preferred Embodiments

Some embodiments described herein make reference to a mobile station or device. A mobile device is a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

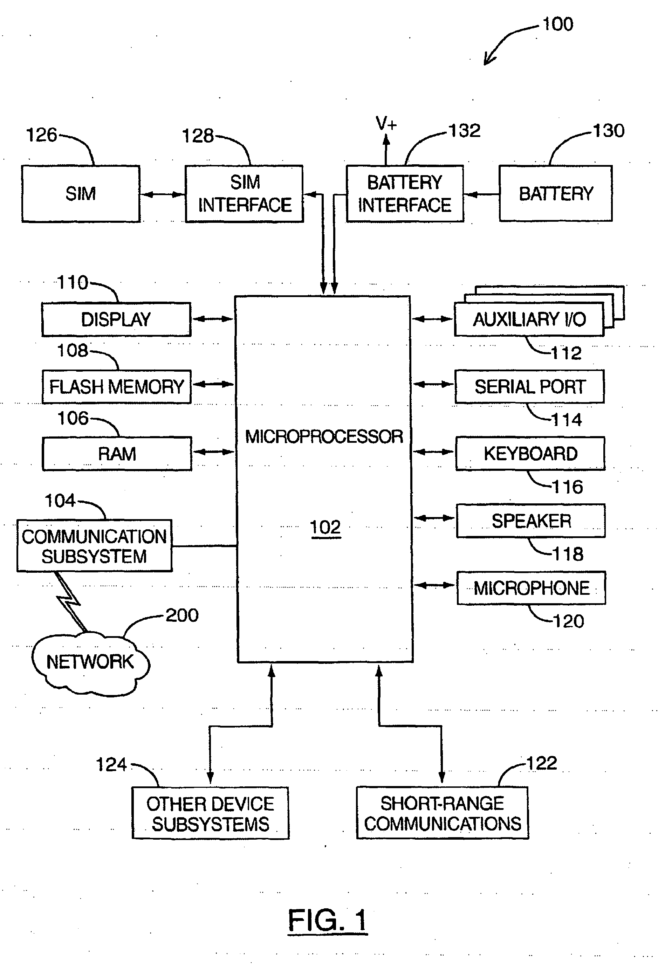

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex™ Radio Network and the DataTAC™ Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications subsystem 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services could include: web browsing and messaging such as e-mail, voice mail, Short Message Service (SMS), Personal Identification Number (PIN) messaging, and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture. Another application that may be loaded onto mobile device 100 would be a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

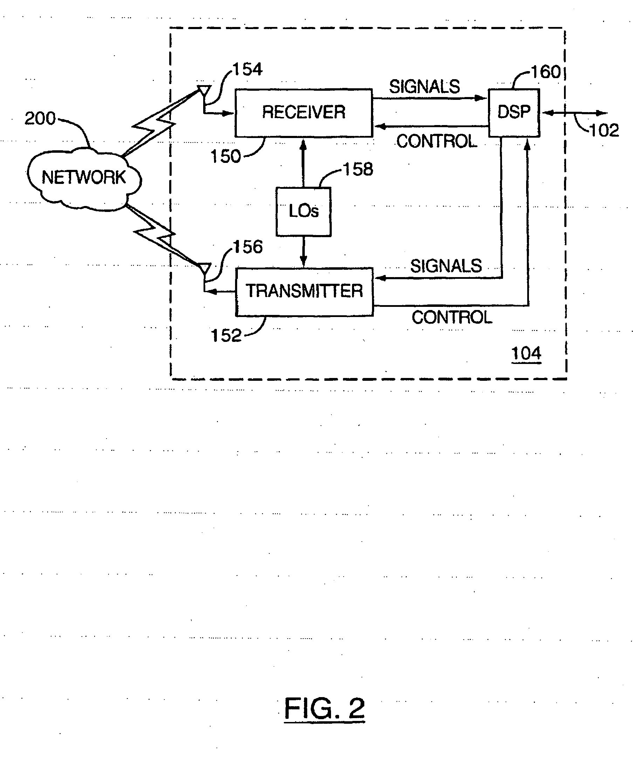

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

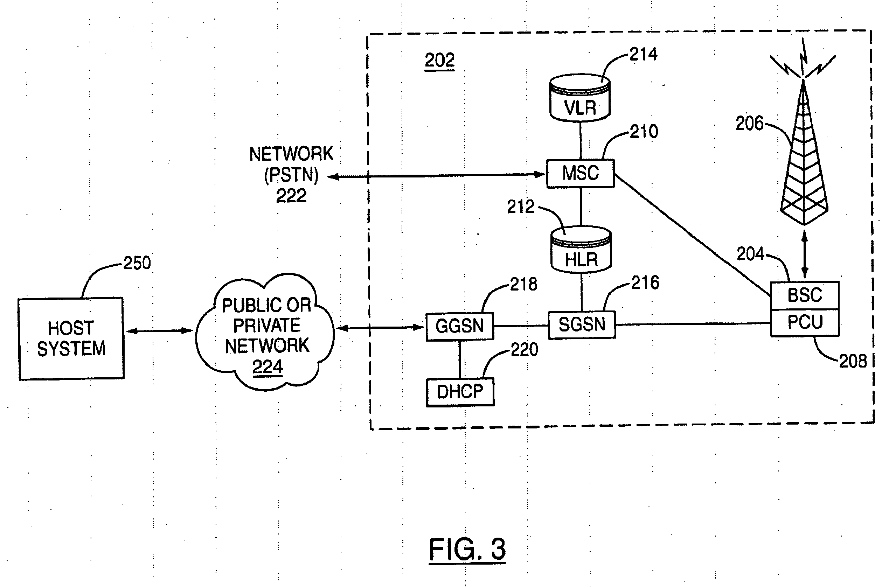

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

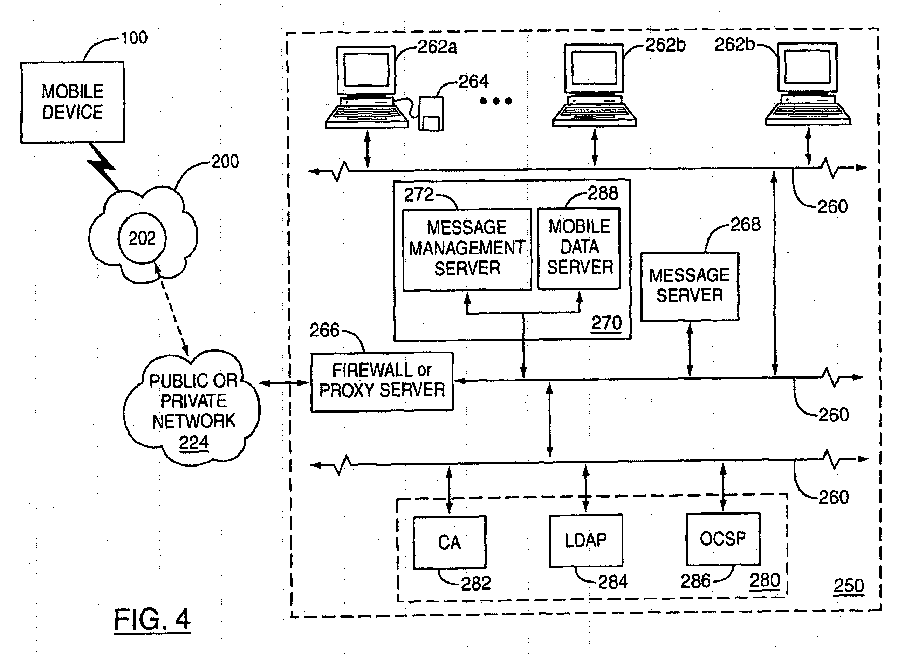

Referring now to FIG. 4, a block diagram illustrating components of a host system in one example configuration is shown. Host system 250 will typically be a corporate office or other local area network (LAN), but may instead be a home office computer or some other private system, for example, in variant implementations. In this example shown in FIG. 4, host system 250 is depicted as a LAN of an organization to which a user of mobile device 100 belongs.

LAN 250 comprises a number of network components connected to each other by LAN connections 260. For instance, a user's desktop computer 262a with an accompanying cradle 264 for the user's mobile device 100 is situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates often performed in initializing mobile device 100 for use. The information downloaded to mobile device 100 may include certificates used in the exchange of messages. The process of downloading information from a user's desktop computer 262a to the user's mobile device 100 may also be referred to as synchronization.

It will be understood by persons skilled in the art that user computers 262a, 262b will typically be also connected to other peripheral devices not explicitly shown in FIG. 4. Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. The concept of a wireless VPN router is new in the wireless industry and implies that a VPN connection can be established directly through a specific wireless network to mobile device 100. The possibility of using a wireless VPN router has only recently been available and could be used when the new Internet Protocol (IP) Version 6 (IPV6) arrives into IP-based wireless networks. This new protocol will provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection would preferably be a Transmission Control Protocol (TCP)/IP or User Datagram Protocol (UDP)/IP connection to deliver the messages directly to mobile device 100 in this variant implementation.

Messages intended for a user of mobile device 100 are initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange™ Server.

In some implementations, LAN 250 may comprise multiple message servers 268. Message server 268 may also be adapted to provide additional functions beyond message management, including the management of data associated with calendars and task lists, for example.

When messages are received by message server 268, they are typically stored in a message store [not explicitly shown], from which messages can be subsequently retrieved and delivered to users. For instance, an e-mail client application operating on a user's computer 262a may request the e-mail messages associated with that user's account stored on message server 268. These messages would then typically be retrieved from message server 268 and stored locally on computer 262a.

When operating mobile device 100, the user may wish to have e-mail messages retrieved for delivery to the handheld. An e-mail client application operating on mobile device 100 may also request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 100 is assigned its own e-mail address, and messages addressed specifically to mobile device 100 are automatically redirected to mobile device 100 as they are received by message server 268.

To facilitate the wireless communication of messages and message-related data between mobile device 100 and components of LAN 250, a number of wireless communications support components 270 may be provided. In this example implementation, wireless communications support components 270 comprise a message management server 272, for example. Message management server 272 is used to specifically provide support for the management of messages, such as e-mail messages, that are to be handled by mobile devices. Generally, while messages are still stored on message server 268, message management server 272 can be used to control when, if, and how messages should be sent to mobile device 100. Message management server 272 also facilitates the handling of messages composed on mobile device 100, which are sent to message server 268 for subsequent delivery.

For example, message management server 272 may: monitor the user's "mailbox" (e.g. the message store associated with the user's account on message server 268) for new e-mail messages; apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with IT policy) and enforced by message management server 272. These may include whether mobile device 100 may receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be adapted to provide other control functions, such as only pushing certain message information or pre-defined portions (e.g. "blocks") of a message stored on message server 268 to mobile device 100. For example, when a message is initially retrieved by mobile device 100 from message server 268, message management server 272 is adapted to push only the first part of a message to mobile device 100, with the part being of a pre-defined size (e.g. 2 KB). The user can then request more of the message, to be delivered in similar-sized blocks by message management server 272 to mobile device 100, possibly up to a maximum pre-defined message size.

Accordingly, message management server 272 facilitates better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices needs to be supported.

It will be understood by persons skilled in the art that LAN 250 may comprise other components in various implementations. For example, multiple public key infrastructure (PKI) server 280 associated with the organization may reside on LAN 250. PKI servers 280 may include, for example, a certificate authority (CA) server 282, a Lightweight Directory Access Protocol (LDAP) server 284, and an Online Certificate Status Protocol (OCSP) server. As a further example, LAN 250 may include a mobile data server 288.

Embodiments of the invention relate generally to the processing of messages, such as peer-to-peer messages, and more specifically to a system and method of distributing keys for use in encrypting and decrypting the contents of such messages to be transmitted between mobile devices. In this specification and in the claims, the terms *peer-to-peer message* and *PIN message* are used interchangeably.

In one example implementation, each mobile device 100 has an eight-digit number associated with it, typically referred to as a Personal Identification Number (PIN). It will be understood by persons skilled in the art that a PIN may comprise more or less digits, or comprise other characters other than numbers (e.g. a PIN may be alphanumeric) in variant implementations. Nevertheless, in general, a mobile device 100 is assigned a PIN that uniquely identifies that particular mobile device 100. The PIN is typically assigned to a mobile device 100 at the time of manufacture, and embedded in a non-volatile memory (e.g. flash memory 108 of FIG. 1) of the mobile device 100. However, in a variant implementation, a PIN can be assigned and then possibly transmitted to a mobile device 100 at some point in time after manufacture.

A peer-to-peer message (PIN message) is a message that may be transmitted from one mobile device to another mobile device, where the PIN of the recipient mobile device is identified by the sender of the message. A client messaging application on a mobile device 100 may be adapted to allow a user of the mobile device 100 to compose a PIN message in a manner that is similar to the manner in which an e-mail message is composed, by accepting a PIN from the user instead of an e-mail address, which is entered in the "To:" field or other destination address field of a message being composed. A message server (e.g. message server 268 of FIG. 4) and/or message management server (e.g. message management server 272 of FIG. 4) may then route the message to the destination mobile device as they would an e-mail message. In some systems, a mapping of the PIN to an associated e-mail address may be made to facilitate the sending of the message.

In other systems, however, a PIN message can be transmitted between mobile devices in a manner that is different from the manner in which e-mail messages are transmitted between mobile devices. For example, a PIN message may be transmitted from one mobile device to another without being routed through a message server (e.g. 268) or a message management server (e.g. 272). In this way, PIN messages might still be sent between users of different mobile devices even if other modes of communication (e.g. e-mail, voice) are unavailable, which may be particularly useful in emergency situations. The wireless network (e.g. wireless network 200) may comprise a relay site and/or other routing components [not explicitly shown] adapted to facilitate the transmission of PIN messages between mobile devices coupled to the network, bypassing the message or message management servers that may be employed for e-mail communications, for example. The systems described above are examples, and other systems with different configurations in which PIN messages may be transmitted between mobile devices may be employed.

When a PIN message is transmitted from one mobile device to another, the contents of the message may be encrypted as a security measure. A key residing on the sender's mobile device may be used to encrypt PIN messages prior to transmission, or decrypt PIN messages received by the mobile device. As noted earlier, in one known implementation, each mobile device associated with a particular manufacturer is provided with the same key (the "common PIN key") to be used for encrypting PIN messages sent to and decrypting PIN messages received by all mobile devices of that manufacturer. However, if one mobile device gets compromised and the common PIN key is discovered, then the common PIN key used by all mobile devices of that manufacturer would become known since the key is shared.

In another known implementation, a smaller subset of mobile devices may share a common key. For example, a corporation (or other organization) may set up a corporate key, which would be used to encrypt and decrypt PIN messages transmitted between mobile devices of users belonging to the corporation. The corporate key may be employed in this manner for this particular group of users, replacing any default key that may have been assigned to the mobile device at the time of manufacture, for example. However, if one mobile device of the group gets compromised and the corporate key is discovered, then the corporate key used by all mobile devices of that group would become known since the key is shared.

Embodiments of the invention are generally directed to a more secure system and method for generating keys that can be used for encrypting and decrypting PIN messages transmitted between mobile devices, such that if only one mobile device in a particular group gets compromised and the key used by that mobile device to encrypt and decrypt PIN messages is discovered, the keys used by other mobile devices in that group to encrypt and decrypt PIN messages would not become known.

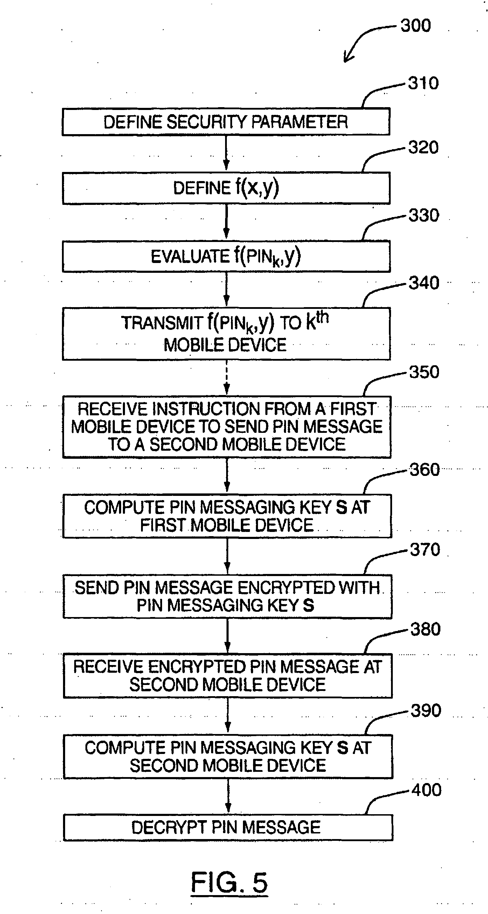

In one embodiment, a bi-variate polynomial is defined and evaluated, so that a function that can be used for key generation may be distributed among multiple mobile devices of a manufacturer, or among multiple mobile devices belonging to a specified group. The function may then be evaluated at an individual mobile device to compute a key for peer-to-peer messaging with another specified mobile device having a known PIN. This embodiment is a novel and inventive application of a theoretical key establishment scheme to wireless communications and peer-to-peer messaging traffic. This embodiment will be described in greater detail with reference to FIG. 5.

Referring to FIG. 5, a flowchart illustrating steps in a method of securely distributing keys to a plurality of mobile devices in an embodiment of the invention is shown generally as 300.

At step 310, a security parameter *d* associated with the group of mobile devices to be protected is defined, typically as a positive integer value. The factors to be considered in defining *d* will be described in further detail below.

At step 320, a function *f* is defined utilizing the value of security parameter *d* defined at step 310. In this embodiment, a function *f* is chosen where:

$$f(x,y) = \sum_{i=0}^{d}\sum_{j=0}^{d} a_{i,j} \cdot x^i \cdot y^j \quad \text{over } F_q$$

Function *f* is a bi-variate polynomial that is defined remotely from the group of mobile devices to be protected, wherein the coefficients $a_{i,j}$ are defined, typically at random. It will be understood that *f* is defined, such that $f(x, y) = f(y,x)$ over the finite field $F_q$ of order *q*. The function *f* can be represented in a form that can be stored in a memory or other storage component, by storing the coefficients $a_{i,j}$ in an array or table, or in some other data structure, for example.

At step 330, for each of the plurality of mobile devices that is to be adapted to transmit and receive encrypted PIN messages, function *f* is evaluated such that one of *x* and *y* is set to the value of the PIN for that respective mobile device.

It is assumed that the value of the PIN is a numerical value having a desired bitlength. If the PIN assigned to a mobile device is not a numerical value of the desired bitlength, a mapping of the PIN to a numerical value is made before function *f* is evaluated. The PIN may need to be converted to an element of $F_q$. This can be done in a number of ways, generally by creating a one-to-one function that maps PIN values to elements of $F_q$. For example, if q is prime, then $F_q$ is known to be isomorphic to the set of integers modulo q. In that case, if all PINs are positive integers strictly less than q, there is an intuitive mapping from PINs to elements, wherein each PIN can be interpreted as an integer mod q.

For example, consider a first mobile device that is to transmit and/or receive encrypted PIN messages. Function *f* can be evaluated by substituting *x* with the value of the first mobile device's PIN:

$$f(PIN_1,y) = \sum_{j=0}^{d} b_{1_j} \cdot y^j$$

The evaluated function, which is to be associated with the first mobile device, is a polynomial comprising one variable (*y*), defined by a new set of coefficients $b_{1_j}$.

Similarly, consider a second mobile device that is to transmit and/or receive encrypted PIN messages.

For example, it may be expected that the first and second mobile devices will transmit PIN messages between themselves. Function *f* can also be evaluated by substituting *x* with the value of the second mobile device's PIN:

$$f(PIN_2,y) = \sum_{j=0}^{d} b_{2_j} \cdot y^j$$

The evaluated function, which is to be associated with the second mobile device, is a polynomial comprising one variable (*y*), defined by a new set of coefficients $b_{2_j}$.

In general, where there is a plurality of mobile devices that are to be adapted to transmit and/or receive encrypted PIN messages, then function *f* can be generally evaluated by substituting x with the value of the $K^{th}$ mobile device's PIN, and repeated for each of *N* mobile devices, *k = 1 ... n:*

$$f(PIN_k,y) = \sum_{j=0}^{d} b_{k_j} \cdot y^j$$

The evaluated function to be associated with the $K^{th}$ mobile device, is a polynomial comprising one variable (*y*), defined by a new set of coefficients $b_{k_j}$.

In general, with respect to the evaluated functions for the plurality of mobile devices, the evaluated function $f(PIN_k,y)$ associated with the $k^{th}$ mobile device can be represented in a form that can be stored in a memory, by storing the coefficients $b_{k_j}$ in an array or table, or in some other data structure, for example.

In one embodiment, the evaluated functions *f* $(PIN_k,y)$ are computed remotely from the plurality of mobile devices. For example, the evaluated functions may be computed on a message management server (e.g. message management server 272 of FIG. 4). At step 340, each evaluated function (e.g. each represented as an array of coefficients) is then pushed to the respective individual mobile device associated with that evaluated function, and stored thereon. The evaluated function stored on a given mobile device can be subsequently used to compute a PIN messaging key to be used to send PIN messages to another mobile device, as described below.

To illustrate the use of the evaluated functions, in operation, at step 350, instructions to send a PIN message to a second mobile device are received at a first mobile device from a user of the first mobile device. For instance, the user may utilize a messaging application to compose a PIN message to be sent to the second mobile device, identifying the PIN of the second mobile device ($PIN_2$) in an address field, and to instruct the application to send the PIN message. The PIN of the first mobile device may be identified in the sender (e.g.

"From:") field of the PIN message.

At step 360, with evaluated function $f(PIN_1,y)$ being already stored on the first mobile device, this evaluated function is further evaluated such that the remaining variable (in this case, $y$) is set to the value of the PIN for the second mobile device (i.e. the intended recipient of the PIN message) in order to compute a PIN messaging key S:

$$f(PIN_1, PIN_2) = S_{12} = S$$

At step 370, the PIN message can be encrypted with the PIN messaging key $S$. Note that since S is an element of $F_q$, the size of q dictates the size of S. A mapping function may be used to map elements of $F_q$ to keys. For example, a hash function could be used as the mapping function. Typically, q should be chosen so that the number of bits in S is not smaller than the desired bitlength of the key, although this is not strictly necessary depending on the mapping function.

The encrypted PIN message is transmitted from the first mobile device to the second mobile device in known manner. The encrypted PIN message is subsequently received by the second mobile device, at step 380.

At step 390, the second mobile device independently computes the PIN messaging key $S$ that is required to decrypt the PIN message. With evaluated function $f(PIN_2,y)$ being already stored on the second mobile device, this evaluated function is further evaluated such that the remaining variable (in this case $y$) is set to the value of the PIN for the first mobile device (i.e. the sender of the PIN message) in order to compute the PIN messaging key $S$:

$$f(PIN_2, PIN_1) = S_{21} = f(PIN_1, PIN_2) = S$$

As function $f$ is defined such that $f(x,y) = f(y,x)$ over the finite field $F_q$ of order $q$, $f(PIN_1,PIN_2)$ and $f(PIN_2,PIN_1)$ both evaluate to the same PIN messaging key S, which is the PIN messaging key shared specifically between the first and second mobile devices. That shared key can then be used to decrypt the PIN message at the second mobile device, at step 400.

From the foregoing description of an exemplary embodiment of the invention, it is clear that the evaluated function $f(PIN_k,y)$ for the $k^{th}$ mobile device can be used to compute a shared key for that mobile device and any other mobile device to which a PIN message is to be sent. Although method 300 has been described as being a method of securely distributing keys, it will be understood that evaluated functions that can be used to derive encryption keys are in fact distributed to the mobile devices, rather than having the actual encryption keys themselves being distributed to the mobile devices. The evaluated function transmitted to and stored in any one of the plurality of mobile devices will typically be different from the evaluated function transmitted to and stored in any other of the plurality of mobile devices. This provides security advantages over the use of a single, common key shared between all of the plurality of mobile devices in a system.

It will also be understood that only the PIN of the intended recipient mobile device is required to generate an encryption key for a PIN message being sent to that recipient. Similarly, only the PIN of the sender of a PIN message is required to generate a key to decrypt a PIN message received from the sender. This may provide a less complex means of encrypting and decrypting PIN messages, as compared to a system where the keys of other parties (e.g. public keys) need to be searched for and obtained.

In contrast to known systems where a single, common key is used, in a system where method 300 is implemented, even if one mobile device is compromised and an attacker discovers the evaluated function for that mobile device in that mobile device's memory or storage component, this would only provide the attacker with enough information to generate the PIN messaging key that would be used for PIN messages sent between that mobile device and other mobile devices in the system. In order to truly break the security of the system as a whole, the attacker would need to discover the original function $f(x,y)$. Referring to the function $f$ defined above with reference to FIG. 5, according to the properties of bi-variate polynomials, it would take $d+1$ polynomials of the form $f(PIN_k,y)$ to recover the original polynomial function $f$. Accordingly, $d$ may be regarded as the security parameter, and may be defined at step 310 to be as large as desired, depending on the degree of security that is required. Put another way, $d+1$ mobile devices would need to be compromised, rather than just one, in order to crack the security of the system in which method 300 is implemented, and d can bet set accordingly.

The security parameter d can be set by a system administrator. An administrator may also have knowledge of the original function $f$, and in that case, the administrator would be able to decrypt PIN messages sent between any given pair of mobile devices in the system.

In the embodiment described above with reference to FIG. 5, the evaluated functions $f(PIN_k,y)$ are computed remotely from the plurality of mobile devices, and pushed to the mobile devices (e.g. by a message management server or other server). The functions may be transmitted via IT policy files being downloaded to the mobile devices. In this manner, a PIN messaging key scheme (e.g. for a corporation or an organization) can be established for a specific group of mobile devices.

Alternatively, in a variant embodiment, the original function $f(x,y)$ can be hard-coded into each of a plurality of mobile devices at the time of manufacture. The function *f* in a given mobile device *k* can then be overwritten with an evaluated function when that mobile device starts up for the first time, for example $f(PIN_k,y)$, evaluated at the mobile device. In another embodiment, the evaluated function $f(PIN_k,y)$ may be hard-coded directly into the $k^{th}$ mobile device, of a plurality of mobile devices.

In the evaluation of the polynomial functions described above, where the functions are represented by a set of coefficients stored in an array, table, or other data structure, it will be understood that these functions will be evaluated by performing mathematical calculations on the coefficients in known manner, to compute either a new set of coefficients representing a new polynomial (that can also be stored in an array, table, or other data structure), or to compute a constant value (e.g. *S*).

It will be understood by persons skilled in the art that coefficients, PINs and/or function values may be subject to scaling if required, in the computation of encryption keys.

In a variant embodiment, the method described above may be employed to generate keys other than PIN messaging keys.

In a variant embodiment, the method described above may be applied to messages transmitted between computing devices other than mobile devices, where a unique identifier is associated with each computing device.

In a variant embodiment, other functions *f*, where $f(x,y) = f(y,x)$, other than bi-variate polynomial functions, may also be employed.

The steps of a method of securely distributing keys to a plurality of mobile devices in embodiments of the invention may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

**Claims**

1.  A method (300) of securely distributing keys to a plurality of mobile devices (100), wherein each of the plurality of mobile devices has a PIN associated therewith, the method comprising the steps of:

    defining (310) a security parameter *d* associated with the plurality of mobile devices;
    defining (320) a function *f* of at most degree *d* associated with the plurality of mobile devices, the function *f* comprising a first variable *x* and a second variable *y*, wherein $f(x,y) = f(y,x)$ over a finite field $F_q$ of order *q*;
for a first mobile device of the plurality of mobile devices, evaluating (330), at the first mobile device, *f* with one of *x* and *y* having the value of the PIN thereof to compute a first device-specific function $f_1$; and
for a second mobile device of the plurality of mobile devices, evaluating (330), at the second mobile device, *f* with one of *x* and *y* having the value of the PIN thereof to compute a second device-specific function $f_2$;

    wherein, in operation, at least one message is encrypted, using a shared key computed at the first mobile device by evaluating $f_1$ with the other of *x* and *y* having the value of the PIN of the second mobile device, and is transmitted from the first mobile device to the second mobile device, the at least one message capable of being decrypted using a shared key computable at the second device by evaluating $f_2$ with the other of *x* and *y* having the value of the PIN of the first mobile device.

2.  The method of claim 1, wherein *f* is a bi-variate function.

3.  The method of claim 1 or claim 2, wherein *f* is a polynomial function.

4.  The method of any one of claims 1 to 3, wherein *f* is expressible in the following form:

$$f(x,y) = \sum_{i=0}^{d} \sum_{j=0}^{d} a_{i,j} \cdot x^i \cdot y^j$$

5.  The method of any one of the preceding claims, further comprising the step of hard-coding *f* into each of the first and second mobile devices prior to performing the evaluating step (330) at the respective device.

6.  The method of any one of the preceding claims, further comprising:

    for each remaining mobile device *k* of the plurality of mobile devices, evaluating (330), at the *k*th mobile device, *f* with one of *x* and *y* having the value of the PIN thereof to compute a respective device-specific function $f_k$ associated therewith.

7.  The method of claim 6, further comprising the step of hard-coding *f* into each remaining mobile device *k* prior to performing the evaluating step (330) at the respective device.

8. A computer program product comprising a computer-readable medium for storing instructions for implementing the method of any one of Claims 1 to 7 when run on a computer.

9. A system for securely distributing keys to a plurality of mobile devices comprising:

a plurality of mobile devices comprising at least first and second mobile devices, each of the plurality of mobile devices having a PIN associated therewith;

wherein at least the first and second mobile devices are communicatively coupled such that a message can be transmitted at least from the first mobile device to the second mobile device;
wherein a security parameter $d$ associated with the plurality of mobile devices and a function $f$ of at most degree d associated with the plurality of mobile devices are defined, the function $f$ comprising a first variable $x$ and a second variable $y$, wherein $f(x,y) = f(y,x)$ over a finite field $F_q$ of order q;
wherein for a first mobile device of the plurality of mobile devices, $f$ is evaluated with one of $x$ and $y$ having the value of the PIN thereof, at the first mobile device, to compute a first device-specific function $f_1$; and
wherein for a second mobile device of the plurality of mobile devices, f is evaluated with one of $x$ and $y$ having the value of the PIN thereof, at the second mobile device, to compute a second device-specific function $f_2$;
wherein the first mobile device is adapted to encrypt at least one message using a shared key computed at the first mobile device by evaluating $f_1$ with the other of $x$ and $y$ having the value of the PIN of the second mobile device, and to transmit the at least one message from the first mobile device to the second mobile device; and
wherein the second mobile device is adapted to receive the at least one message and decrypt the at least one message using a shared key computable at the second device by evaluating $f_2$ with the other of $x$ and $y$ having the value of the PIN of the first mobile device.

10. The system of claim 9, wherein $f$ is a bi-variate function.

11. The system of claim 9 or claim 10, wherein $f$ is a polynomial function.

12. The system of any one of claims 9 to 11, wherein $f$ is expressible in the following form:

$$f(x,y) = \sum_{i=0}^{d}\sum_{j=0}^{d} a_{i,j} \cdot x^i \cdot y^j$$

13. The system of any one of claims 9 to 12, wherein $f$ is hard-coded into each of the first and second mobile devices prior to evaluating $f$ at the respective device.

14. The system of any one of claims 9 to 13, wherein for each remaining mobile device $k$ of the plurality of mobile devices, $f$ *is evaluated* with one of $x$ and $y$ having the value of the PIN thereof, at the $k$th mobile device, to compute a respective device-specific function $f_k$ associated therewith.

15. The system of claim 14, wherein $f$ is hard-coded into each remaining mobile device $k$ prior to evaluating $f$ at the respective device.

**Patentansprüche**

1. Verfahren (300) zum sicheren Verteilen von Schlüsseln an eine Vielzahl von Mobilgeräten (100), wobei jedem der Vielzahl von Mobilgeräten eine PIN zugeordnet ist, das Verfahren umfassend die folgenden Schritte:

das Definieren (310) eines Sicherheitsparameters d, welcher der Vielzahl von Mobilgeräten zugeordnet ist;
das Definieren (320) einer Funktion $f$ des höchsten Grades d, welcher der Vielzahl von Mobilgeräten zugeordnet ist, dabei die Funktion $f$ eine erste Variable $x$ und eine zweite Variable $y$ enthaltend, wobei $f(x,y) = f(y,x)$ über ein finites Feld $F_q$ der Ordnung $q$;
für ein erstes Mobilgerät aus der Vielzahl von Mobilgeräten am ersten Mobilgerät das Auswerten (330) von $f$ mit einem von x und $y$ den Wert der PIN von diesem habend, um eine erste gerätespezifische Funktion $f_1$ zu berechnen; und
für ein zweites Mobilgerät aus der Vielzahl von Mobilgeräten am zweiten Mobilgerät das Auswerten (330) von $f$ mit einem von $x$ und $y$ den Wert der PIN von diesem habend, um eine zweite gerätespezifische Funktion $f_2$ zu berechnen;

wobei beim Betrieb am ersten Mobilteil mindestens eine Nachricht verschlüsselt wird, wozu ein gemeinsam verwendeter Schlüssel verwendet wird, der berechnet wird, indem $f_1$ ausgewertet wird mit dem jeweils anderen von $x$ und $y$ den Wert der PIN des zweiten Mobilgeräts habend, und von dem ersten Mobilgerät zu dem zweiten Mobilgerät übertragen wird, die mindestens eine Nachricht mithilfe eines gemeinsam verwendeten Schlüssels entschlüsselt werden kann, der an dem zweiten Gerät berechnet werden kann, indem $f_2$ ausgewertet wird mit dem jeweils anderen von *x* und *y* den Wert der PIN des ersten Mobilgeräts habend.

2. Verfahren gemäß Anspruch 1, wobei *f* eine bivariate Funktion ist.

3. Verfahren gemäß Anspruch 1 oder Anspruch 2, wobei *f* eine polynomische Funktion ist.

4. Verfahren gemäß einem der Ansprüche 1 bis 3, wobei *f* in folgender Form ausgedrückt werden kann:

$$f(x,y) = \sum_{i=0}^{d}\sum_{j=0}^{d} a_{i,j} \cdot x^i \cdot y^j$$

5. Verfahren gemäß einem der vorherigen Ansprüche, des Weiteren umfassend den Schritt des Hartcodierens von *f* in jedes der ersten und zweiten Mobilgeräte vor dem Durchführen des Auswertungsschritts (330) am jeweiligen Gerät.

6. Verfahren entsprechend einem der vorherigen Ansprüche, des Weiteren umfassend:

für jedes verbleibende Mobilgerät *k* aus der Vielzahl von Mobilgeräten am *k*-ten Mobilgerät das Auswerten (330) von *f* mit einem von *x* und *y* den Wert der PIN von diesem habend, um eine jeweilige gerätespezifische Funktion $f_k$ zu berechnen, die diesem zugeordnet ist.

7. Verfahren gemäß Anspruch 6, des Weiteren umfassend den Schritt des Hartcodierens von *f* in jedes verbleibende Mobilgerät *k* vor dem Durchführen des Auswertungsschritts (330) an dem jeweiligen Gerät.

8. Computerprogrammprodukt, umfassend ein computerlesbares Medium zur Speicherung von Anweisungen zur Implementierung des Verfahrens gemäß einem der Ansprüche 1 bis 7, wenn diese auf einem Computer ausgeführt werden.

9. System zum sicheren Verteilen von Schlüsseln an eine Vielzahl von Mobilgeräten, umfassend:

eine Vielzahl von Mobilgeräten, die mindestens ein erstes und ein zweites Mobilgerät umfasst, und jedem aus der Vielzahl von Mobilgeräten ist eine PIN zugeordnet;

wobei mindestens das erste und das zweite Mobilgerät kommunikationsfähig gekoppelt sind, so dass eine Nachricht mindestens vom ersten Mobilgerät an das zweite Mobilgerät übertragen werden kann; wobei ein Sicherheitsparameter *d*, welcher der Vielzahl von Mobilgeräten zugeordnet ist, und eine Funktion *f* des höchsten Grades *d*, welcher der Vielzahl von Mobilgeräten zugeordnet ist, definiert werden, dabei die Funktion *f* eine erste Variable *x* und eine zweite Variable *y* enthaltend, wobei *f(x,y) = f(y, x)* über ein finites Feld $F_q$ der Ordnung q;
wobei für ein erstes Mobilgerät aus der Vielzahl von Mobilgeräten am ersten Mobilgerät *f* ausgewertet wird mit einem von *x* und *y* den Wert der PIN von diesem habend, um eine erste gerätespezifische Funktion $f_1$ zu berechnen; und
wobei für ein zweites Mobilgerät aus der Vielzahl von Mobilgeräten am zweiten Mobilgerät *f* ausgewertet wird mit einem von *x* und *y* den Wert der PIN von diesem habend, um eine zweite gerätespezifische Funktion $f_2$ zu berechnen;
wobei das erste Mobilgerät dazu angepasst ist, mindestens eine Nachricht mithilfe eines gemeinsam verwendeten Schlüssels zu verschlüsseln, der am ersten Mobilgerät berechnet wird, indem $f_1$ ausgewertet wird mit dem jeweils anderen von *x* und *y* den Wert der PIN des zweiten Mobilgeräts habend, und die mindestens eine Nachricht von dem ersten Mobilgerät an das zweite Mobilgerät zu übertragen; und wobei das zweite Mobilgerät dazu angepasst ist, die mindestens eine Nachricht zu empfangen und die mindestens eine Nachricht mithilfe eines gemeinsam verwendeten Schlüssels zu entschlüsseln, der am zweiten Gerät berechnet werden kann, indem $f_2$ ausgewertet wird mit dem jeweils anderen von *x* und *y* den Wert der PIN des ersten Mobilgeräts habend.

10. System gemäß Anspruch 9, wobei *f* eine bivariate Funktion ist.

11. System gemäß Anspruch 9 oder Anspruch 10, wobei *f* eine polynomische Funktion ist.

12. System gemäß einem der Ansprüche 9 bis 11, wobei *f* in folgender Form ausgedrückt werden kann:

$$f(x,y) = \sum_{i=0}^{d}\sum_{j=0}^{d} a_{i,j} \cdot x^i \cdot y^j$$

13. System gemäß einem der Ansprüche 9 bis 12, wobei *f* in jedes der ersten und zweiten Mobilgeräte vor dem Auswerten von *f* am jeweiligen Gerät hartcodiert wird.

14. System gemäß einem der Ansprüche 9 bis 13, wobei für jedes verbleibende Mobilgerät *k* aus der Vielzahl von Mobilgeräten am *k*-ten Mobilgerät *f* ausgewertet wird mit einem von *x* und *y* den Wert der PIN von diesem habend, um eine jeweilige gerätespezifische Funktion $f_k$ zu berechnen, die diesem zugeordnet ist.

15. System gemäß Anspruch 14, wobei vor dem Auswerten von $f$ in jedem verbleibenden Gerät $k$ in das jeweilige Gerät hartcodiert wird.

## Revendications

1. Un procédé (300) destiné à une distribution sécurisée de clés à une pluralité de dispositifs mobiles (100), où chaque dispositif de la pluralité de dispositifs mobiles possède un code PIN associé à ce dernier, le procédé comprenant les opérations suivantes :

   la définition (310) d'un paramètre de sécurité $d$ associé à la pluralité de dispositifs mobiles,
   la définition (320) d'une fonction $f$ d'au plus de degré $d$ associée à la pluralité de dispositifs mobiles, la fonction $f$ comprenant une première variable $x$ et une deuxième variable $y$, où $f(x,y) = f(y,x)$ sur un champ fini $F_q$ d'ordre $q$,
   pour un premier dispositif mobile de la pluralité de dispositifs mobiles, l'évaluation (330), sur le premier dispositif mobile, de $f$ avec une des variables $x$ et $y$ possédant la valeur du code PIN de ce dernier afin de calculer une première fonction spécifique au dispositif $f_1$, et
   pour un deuxième dispositif mobile de la pluralité de dispositifs mobiles, l'évaluation (330), sur le deuxième dispositif mobile, de $f$ avec une des variables $x$ et $y$ possédant la valeur du code PIN de ce dernier afin de calculer une deuxième fonction spécifique au dispositif $f_2$,

   où, en fonctionnement, au moins un message est chiffré, au moyen d'une clé partagée calculée sur le premier dispositif mobile en évaluant $f_1$ avec l'autre variable $x$ et $y$ possédant la valeur du code PIN du deuxième dispositif mobile, et est transmis du premier dispositif mobile vers le deuxième dispositif mobile, le au moins un message pouvant être déchiffré au moyen d'une clé partagée calculable sur le deuxième dispositif en évaluant $f_2$ avec l'autre variable $x$ et $y$ possédant la valeur du code PIN du premier dispositif mobile.

2. Le procédé selon la Revendication 1, où $f$ est une fonction à deux variables.

3. Le procédé selon la Revendication 1 et 2, où $f$ est une fonction polynomiale.

4. Le procédé selon l'une quelconque des Revendications 1 à 3, où $f$ peut être exprimée sous la forme suivante :

$$f(x,y) = \sum_{i=0}^{d}\sum_{j=0}^{d} a_{i,j} \cdot x^i \cdot y^j$$

5. Le procédé selon l'une quelconque des Revendications précédentes, comprenant en outre l'opération d'incorporation au code source de $f$ dans chacun des premier et deuxième dispositifs mobiles avant l'exécution de l'opération d'évaluation (330) sur le dispositif concerné.

6. Le procédé selon l'une quelconque des Revendications précédentes, comprenant en outre :

   pour chaque dispositif mobile restant $k$ de la pluralité de dispositifs mobiles, l'évaluation (330), sur le $k$ème dispositif mobile, de $f$ avec une des variables $x$ et $y$ possédant la valeur du code PIN de ce dernier afin de calculer une fonction spécifique au dispositif respective $f_k$ associée à ce dernier.

7. Le procédé selon la Revendication 6, comprenant en outre l'opération d'incorporation au code source de $f$ dans chaque dispositif mobile restant $k$ avant l'exécution de l'opération d'évaluation (330) sur le dispositif concerné.

8. Un programme informatique comprenant un support lisible par ordinateur destiné à conserver en mémoire des instructions destinées à mettre en oeuvre le procédé selon l'une quelconque des Revendications 1 à 7 lorsqu'il est exécuté sur un ordinateur.

9. Un système destiné à distribuer de manière sécurisée des clés à une pluralité de dispositifs mobiles comprenant :

   une pluralité de dispositifs mobiles comprenant au moins un premier et un deuxième dispositifs mobiles, chaque dispositif de la pluralité de dispositifs mobiles possédant un code PIN associé à ce dernier,
   où au moins le premier et le deuxième dispositifs mobiles sont couplés en communication de sorte qu'un message puisse être transmis au moins du premier dispositif mobile vers le deuxième dispositif mobile,
   où un paramètre de sécurité $d$ associé à la pluralité de dispositifs mobiles et une fonction $f$ d'au plus de degré $d$ associée à la pluralité de dispositifs mobiles sont définis, la fonction $f$ comprenant une première variable $x$ et une deuxième variable $y$, où $f(x,y) = f(y,x)$ sur un champ fini $F_q$ d'ordre $q$, où, pour un premier dispositif mobile de la pluralité de dispositifs mobiles, $f$ est évaluée avec une des variables $x$ et $y$ possédant la valeur du code PIN de ce dernier, sur le premier dispositif mobile, afin de calculer une première fonction spécifique au dispositif $f_1$, et

où, pour un deuxième dispositif mobile de la pluralité de dispositifs mobiles, $f$ est évaluée avec une des variables $x$ et $y$ possédant la valeur du code PIN de ce dernier, sur le deuxième dispositif mobile, afin de calculer une deuxième fonction spécifique au dispositif $f_2$,

où le premier dispositif mobile est adapté de façon à chiffrer au moins un message au moyen d'une clé partagée calculée sur le premier dispositif mobile en évaluant $f_1$ avec l'autre variable $x$ et $y$ possédant la valeur du code PIN du deuxième dispositif mobile, et de façon à transmettre le au moins un message du premier dispositif mobile vers le deuxième dispositif mobile, et

où le deuxième dispositif mobile est adapté de façon à recevoir le au moins un message et à déchiffrer le au moins un message au moyen d'une clé partagée calculable sur le deuxième dispositif en évaluant $f_2$ avec l'autre variable $x$ et $y$ possédant la valeur du code PIN du premier dispositif mobile.

10. Le système selon la Revendication 9, où $f$ est une fonction à deux variables.

11. Le système selon la Revendication 9 ou 10, où $f$ est une fonction polynomiale

12. Le système selon l'une quelconque des Revendications 9 à 11, où $f$ peut être exprimée sous la forme suivante :

$$f(x,y) = \sum_{i=0}^{d}\sum_{j=0}^{d} a_{i,j} \cdot x^i \cdot y^j$$

13. Le système selon l'une quelconque des Revendications 9 à 12, où $f$ est incorporée dans le code source de chacun des premier et deuxième dispositifs mobiles avant l'évaluation de $f$ sur le dispositif concerné.

14. Le système selon l'une quelconque des Revendications 9 à 13, où, pour chaque dispositif mobile restant $k$ de la pluralité de dispositifs mobiles, $f$ est évaluée avec une des variables $x$ et $y$ possédant la valeur du code PIN de ce dernier, sur le $k$ème dispositif mobile, afin de calculer une fonction spécifique au dispositif respective $f_k$ associée à ce dernier.

15. Le système selon la Revendication 14, où $f$ est incorporée dans le code source de chaque dispositif mobile restant $k$ avant l'évaluation de $f$ sur le dispo-

sitif concerné.

FIG. 1

## FIG. 2

NETWORK
(PSTN)
222

202

214

VLR

210

MSC

212

HLR

218

GGSN

216

SGSN

220

DHCP

206

204

BSC
PCU

208

250

HOST
SYSTEM

PUBLIC OR
PRIVATE
NETWORK
224

FIG. 3

EP 1 798 889 B1

18

FIG. 4

300

310
DEFINE SECURITY PARAMETER

320
DEFINE $f(x,y)$

330
EVALUATE $f(PIN_k,y)$

340
TRANSMIT $f(PIN_k,y)$ TO $k^{th}$ MOBILE DEVICE

350
RECEIVE INSTRUCTION FROM A FIRST MOBILE DEVICE TO SEND PIN MESSAGE TO A SECOND MOBILE DEVICE

360
COMPUTE PIN MESSAGING KEY **S** AT FIRST MOBILE DEVICE

370
SEND PIN MESSAGE ENCRYPTED WITH PIN MESSAGING KEY **S**

380
RECEIVE ENCRYPTED PIN MESSAGE AT SECOND MOBILE DEVICE

390
COMPUTE PIN MESSAGING KEY **S** AT SECOND MOBILE DEVICE

400
DECRYPT PIN MESSAGE

FIG. 5